# EUROPEAN PATENT APPLICATION

(11) **EP 4 510 744 A1**
(43) Date of publication of application: **19.02.2025**
(21) Application number: 23787688.3
(22) Date of filing: 11.04.2023
(51) Int. Cl.: H04W 72/12

(54) **INFORMATION RECEIVING METHOD AND APPARATUS, INFORMATION SENDING METHOD AND APPARATUS, AND DEVICE**

(30) Priority: 12.04.2022 CN 202210383949
(71) Applicant: VIVO MOBILE COMMUNICATION CO., LTD., Dongguan, Guangdong 523863 (CN)
(72) Inventor: LI, Can, Dongguan, Guangdong 523863 (CN); LIU, Siqi, Dongguan, Guangdong 523863 (CN); LI, Gen, Dongguan, Guangdong 523863 (CN); JI, Zichao, Dongguan, Guangdong 523863 (CN)
(74) Representative: Lavoix
(86) International application number: PCT/CN2023/087581
(87) International publication number: WO 2023/198044

(57) **Abstract**

This application discloses an information receiving method, an information transmitting method, apparatuses and a device, which belongs to the technical field of communications. The information receiving method in an embodiment of this application includes: receiving, by a terminal, downlink control information DCI transmitted by a network-side device, the DCI being used for scheduling N cells for transmission, N being an integer greater than 1.

## Description

### CROSS-REFERENCE TO RELATED APPLICATION

This application claims the priority of Chinese Patent Application No. 202210383949.9 filed in China on April 12, 2022, the entire content of which is hereby incorporated by reference.

### TECHNICAL FIELD

This application relates to the technical field of communications, and in particular, to an information receiving method, an information transmitting method, apparatuses, and a device.

### BACKGROUND

As available discrete spectrum and wider bandwidth spectrum increase, the demand for simultaneous scheduling of multiple cells will increase. At present, when multiple cells are scheduled for data transmission, a physical downlink shared channel (Physical downlink shared channel, PDSCH) or physical uplink shared channel (Physical Uplink Shared Channel, PUSCH) of a cell is scheduled for data transmission with a downlink control information (Downlink Control Information, DCI), which leads to relatively high signaling overheads.

### SUMMARY

An embodiment of this application provides an information receiving method, an information transmitting method, apparatuses, and a device, which can solve the problem that signaling overheads are relatively high when multiple cells are scheduled for data transmission.

In a first aspect, provided is an information receiving method, including:
receiving, by a terminal, downlink control information DCI transmitted by a network-side device, the DCI being used for scheduling N cells for transmission, N being an integer greater than 1.

In a second aspect, provided is an information transmitting method, including:
transmitting, by a network-side device, downlink control information DCI to a terminal, the DCI being used for scheduling N cells for transmission, N being an integer greater than 1.

In a third aspect, provided is an information receiving apparatus, a terminal including the information receiving apparatus, the information receiving apparatus including:
a receiving module, configured to receive downlink control information DCI transmitted by a network-side device, the DCI being used for scheduling N cells for transmission, N being an integer greater than 1.

In a fourth aspect, provided is an information transmitting apparatus, a network-side device including the information transmitting apparatus, including:
a transmitting module, configured to transmit downlink control information DCI to a terminal, the DCI being used for scheduling N cells for transmission, N being an integer greater than 1.

In a fifth aspect, provided is a terminal, including a processor and a memory, where the memory stores a program and instruction runnable on the processor, and the program or instruction, when executed by the processor, implements the steps of the method as described in the first aspect.

In a sixth aspect, provided is a terminal, including a processor and a communication interface, where the communication interface is configured to receive downlink control information DCI transmitted by a network-side device, the DCI being used for scheduling N cells for transmission, N being an integer greater than 1.

In a seventh aspect, provided is a network-side device, including a processor and a memory, where the memory stores a program or instruction runnable on the processor, and the program or instruction, when executed by the processor, implements the steps of the method as described in the second aspect.

In an eighth aspect, provided is a network-side device, including a processor and a communication interface, where the communication interface is configured to transmit downlink control information DCI to a terminal, the DCI is used for scheduling N cells for transmission, N being an integer greater than 1.

In a ninth aspect, provided is an information transceiving system, including: a terminal and a network-side device, where the terminal may be configured to execute the steps of the information receiving method as described in the first aspect, and the network-side device may be configured to execute the steps of the information transmitting method as described in the second aspect.

In a tenth aspect, provided is a readable storage medium having stored thereon a program or instruction which, when executed by a processor, implements the steps of the method as described in the first aspect or the steps of the method as described in the second aspect.

In an eleventh aspect, provided is a chip, including a processor and a communication interface, where the communication interface is coupled with the processor, and the processor is configured to run a program or instruction to implement the method as described in the first aspect or the method as described in the second aspect.

In a twelfth aspect, provided is a computer program/program product stored in a storage medium, where the computer program/program product, when executed by at least one processor, implements the method as described in the first aspect or the method as described in the second aspect.

In this embodiment of this application, the terminal receives the downlink control information DCI transmitted by the network-side device, where the DCI is used for scheduling N cells for transmission, N being an integer greater than 1. In this way, signaling overheads can be reduced by scheduling N cells for transmission with the DCI.

### BRIEF DESCRIPTION OF THE DRAWINGS

FIG. 1 is a block diagram of a wireless communication system to which embodiments of this application are applicable;
FIG. 2 is a flowchart of an information receiving method provided in an embodiment of this application;
FIG. 3 is a flowchart of an information transmitting method provided in an embodiment of this application;
FIG. 4 is a flowchart of an information receiving apparatus provided in an embodiment of this application;
FIG. 5 is a structural diagram of an information transmitting apparatus provided in an embodiment of this application;
FIG. 6 is a structural diagram of a communication device provided in an embodiment of this application;
FIG. 7 is a schematic structural diagram of a terminal provided in an embodiment of this application; and
FIG. 8 is a structural schematic diagram of a network-side device provided in an embodiment of this application

### DETAILED DESCRIPTION

The technical schemes in embodiments of this application will be clearly described below with reference to the drawings in the embodiments of this application. Apparently, the described embodiments are merely some rather than all of the embodiments of this application. All other embodiments obtained by those of ordinary skill in the art based on the embodiments of this application fall within the protection scope of this application.

The terms "first", "second", and the like in this description and claims of this application are used to distinguish similar objects, and are not used to describe a specific order or sequence. It should be understood that terms used in this way are exchangeable where appropriate, so that the embodiments of this application can be implemented in an order other than those illustrated or described here, and the objects distinguished by "first" and "second" are usually of a same type, without limiting the number of the objects, for example, the number of the first object may be one or more. Furthermore, "and/or" used in this specification and the claims represents at least one of the connected objects, and the character "/" generally represents an "or" relationship between the associated objects.

It is worth pointing out that the technologies described in the embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application can be often used interchangeably. The technologies described not only can be applied to the systems and radio technologies mentioned above, as well as to other systems and radio technologies. The following description describes a New Radio (NR) system for illustration, and NR terminology is used in most of the following descriptions, but these technologies can also be applied to applications other than NR system applications, such as 6^{th} Generation (6^{th} Generation, 6G) communication systems.

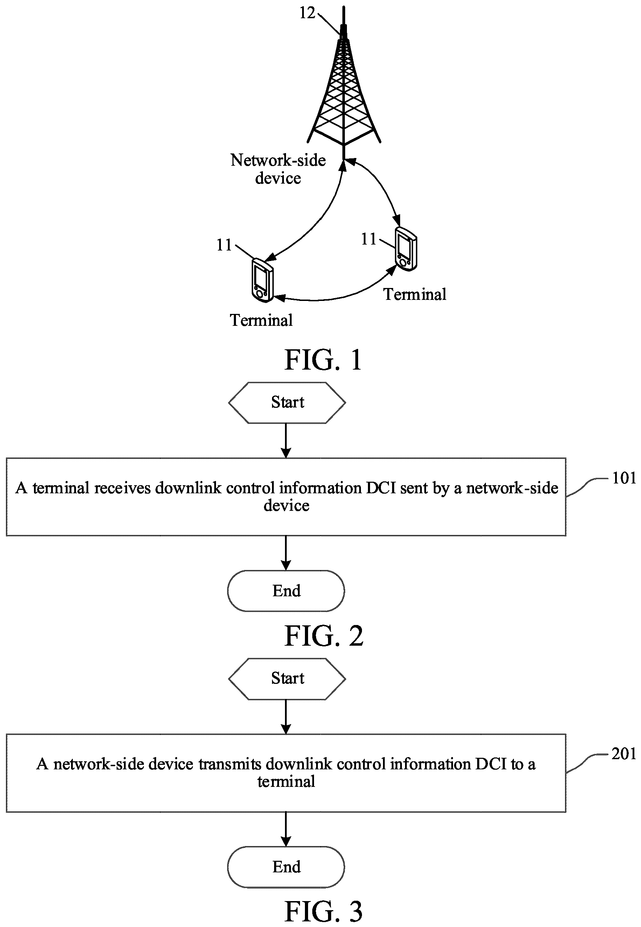

FIG. 1 shows a block diagram of a wireless communication system to which embodiments of this application are applicable. The wireless communication system includes a terminal 11 and a network-side device 12. The terminal 11 may be a terminalside device, such as a mobile phone, a tablet personal computer (Tablet Personal Computer), a laptop computer (Laptop Computer) or a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home devices with a wireless communication function, such as a refrigerator, TV, a washing machine, or furniture), a game machine, a personal computer (personal computer, PC), a teller machine or a self-service machine, where the wearable device includes: smart watches, smart bracelets, smart headphones, smart glasses, smart jewelry (smart bangles, smart bracelets, smart rings, smart necklaces, smart leglets, smart anklets, etc.), smart wristbands, smart clothing, etc. It should be noted that the specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a WLAN access point, a WiFi node, etc. The base station may be referred to as NodeB, evolved NodeB (eNB), an access point, a base transceiver station (Base Transceiver Station, BTS), a radio base station, a radio transceiver, a basic service set (Basic Service Set, BSS), an extended service set (Extended Service Set, ESS), home NodeB, home evolved NodeB, a transmitting receiving point (Transmitting Receiving Point, TRP) or some other appropriate terminology in the art. As long as a same technical effect is achieved, the base station is not limited to specific technical vocabulary. It should be noted that only the base station in the NR system is taken as an example for introduction in the embodiments of this application, and the specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), local NEF (Local NEF or L-NEF), a binding support function (Binding Support Function, BSF), an application function (Application Function, AF), etc. It should be noted that only the core network device in the NR system is taken as an example for introduction in the embodiments of this application, and the specific type of the core network device is not limited.

The information receiving method, information transmitting method, apparatuses, and device provided by the embodiments of this application will be described in detail with specific embodiments and application scenarios thereof in conjunction with the accompanying drawings.

Referring to FIG. 2, FIG. 2 is a flowchart of an information receiving method provided in an embodiment of this application. As shown in FIG. 2, the information receiving method includes the following step:
Step 101: A terminal receives downlink control information DCI transmitted by a network-side device, where the DCI is used for scheduling N cells for transmission, N being an integer greater than 1.

In addition, the terminal receives the DCI transmitted by the network-side device, where the DCI is used for scheduling the N cells for transmission, which can be considered as multi-cell (multi-cell) scheduling.

In an embodiment, each of the N cells has one PUSCH and/or PDSCH.

In an embodiment, the scheduling the N cells for transmission may be dynamically scheduling and/or semi-statically scheduling the N cells for transmission. The above-mentioned semi-static scheduling may include at least one of semi-static scheduling activation, semi-static scheduling deactivation and semi-static retransmission scheduling.

It should be noted that the DCI can be set to not support that any two of the semi-static scheduling activation, semi-static deactivation, semi-static repeat, and dynamic scheduling are performed simultaneously. That is, the DCI can only be used for performing any one of the semi-static scheduling activation, semi-static deactivation, semi-static repeat, and dynamic scheduling.

It should be noted that taking the terminal as user equipment (User Equipment, UE) as an example, the UE can report a band (band) set and/or carrier pairs and the like available for multi-cell scheduling to the network-side device. A capability of UE includes:
(1) a DCI can be used for a band set and/or carrier set for multi-cell scheduling.
(2) types of multi-cell scheduling: whether the UE supports multi-cell scheduling of intra-band carrier aggregation and/or inter-band carrier aggregation, or multi-cell scheduling within a frequency range (Frequency Range, FR) and within an unlicensed spectrum.
(3) support a case that a carrier and/or band for scheduling uses a same subcarrier spacing (Subcarrier Spacing, SCS) and/or bandwidth part (Bandwidth Part, BWP) identifier (id), or specified SCS and/or BWP id.
(4) the cells can be used for scheduling or can be scheduled.
(5) DCI fields can be shared and/or separately indicated, optionally, based on each band and/or carrier.
(6) SCSs of activated BWPs of different cells are same, and if the SCSs are different, multi-cell scheduling cannot be performed.

In the embodiments of this application, the terminal receives the downlink control information DCI transmitted by the network-side device, where the DCI is used for scheduling N cells for transmission, N being an integer greater than 1. The N cells meet a first condition. In this way, signaling overheads can be reduced by scheduling N cells for transmission with the DCI.

Optionally, the N cells meet a first condition, the first condition including at least one of the following:
each of the N cells has at least one data channel or reference signal;
at least two of the N cells belong to a same cell group;
at least two of the N cells belong to a preset cell group;
at least two of the N cells belong to a same timing advance group (Timing Advance Group, TAG);
working modes of at least two of the N cells are matched;
frequency-domain resources of at least two of the N cells are matched;
at least two of the N cells belong to a same physical uplink control channel (Physical Uplink Control Channel, PUCCH) cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; where
N is less than or equal to a preset value.

It should be noted that each of the N cells has at least one data channel or reference signal, so that multi-cell scheduling is simple to implement. In an embodiment, each cell only has one PDSCH or PUSCH.

In addition, at least two of the N cells belong to a same cell group. For example, at least two of the N cells belong to a same master cell group (Master Cell Group, MCG) and/or a secondary cell group (Secondary Cell Group, SCG), so that multi-cell scheduling is simple to implement. In an embodiment, the N cells all belong to a same cell group.

It should be noted that at least two of the N cells belong to a same TAG, so that multi-cell scheduling is simple to implement. In an embodiment, the N cells all belong to a same TAG.

In addition, the working modes of the at least two of the N cells are matched, which may be that time division duplex (Time Division Duplex, TDD) patterns of the at least two of the N cells are the same and/or specified. Thus, feedback delays and overheads can be reduced. In an embodiment, TDD patterns of the N cells are the same.

It should be noted that the at least two of the N cells belong to a preset PUCCH cell group, which may be considered as that a PUCCH cell group to which at least two of the N cells belong is specified. At least two of the N cells belong to a same PUCCH cell group, and/or, at least two of the N cells belong to a preset PUCCH cell group, so that feedback delays and overheads of multi-cell scheduling can be reduced.

In an embodiment, the N cells belong to a same PUCCH cell group.

In an embodiment, the N cells are all in an active state.

In an embodiment, activated BWPs of the N cells are all in a non-dormant state.

In addition, N is less than a preset value, that is, N has a maximum value limit.

In an embodiment, N is a preset value, so that the multi-cell scheduling is simple to implement.

The embodiments of this application proposes that multi-cell scheduling requires a defined scheduling restriction, which can reduce control signaling overheads, reduce the implementation complexity of UE, guarantee the performance of PDCCH, and increase coverage.

Optionally, that working modes of at least two of N cells are matched includes at least one of the following:
time division duplex patterns of the at least two of the N cells are the same, and/or the time division duplex patterns of the at least two of the N cells are a preset pattern; and
half-duplex modes of the at least two of the N cells are the same, and/or the half-duplex modes of the at least two of the N cells are a preset mode.

The time division duplex patterns of the at least two of the N cells are a preset pattern, which may be considered as that the time division duplex patterns of the at least two cells are a specified pattern.

In an embodiment, time division duplex patterns of the N cells are the same.

It should be noted that the time division duplex patterns of the at least two of the N cells are the same, and/or the time division duplex patterns of the at least two of the N cells are a preset pattern, which can reduce feedback delays and overheads of multi-cell scheduling.

In an embodiment, the half-duplex modes of the at least two of the N cells are the same, which may be that the half-duplex modes of the at least two of the N cells are each TDD or frequency division duplex (Frequency Division Duplex, FDD) configuration.

The half-duplex modes of the at least two of the N cells are a preset mode, which may be considered as that the half-duplex modes of the at least two of the N cells are specified modes.

In an embodiment, half-duplex modes of the N cells are the same.

It should be noted that the half-duplex modes of the at least two of the N cells are the same, and/or the half-duplex modes of the at least two of the N cells are a preset mode, which can reduce feedback delays and overheads of multi-cell scheduling.

Optionally, that frequency-domain resources of at least two of the N cells are matched includes at least one of the following:
the at least two of the N cells belong to a same band;
the at least two of the N cells belong to a same band combination;
the at least two of the N cells belong to a same band pair;
the at least two of the N cells belong to a same frequency range;
the at least two of the N cells belong to a licensed spectrum;
the at least two of the N cells belong to an unlicensed spectrum;
the at least two of the N cells belong to a preset band;
the at least two of the N cells belong to a preset band combination;
the at least two of the N cells belong to a preset band pair;
the at least two of the N cells belong to a preset frequency range;
the at least two of the N cells belong to a preset licensed spectrum; and
the at least two of the N cells belong to a preset unlicensed spectrum.

In an embodiment, the N cells belong to a same band;
the N cells belong to a same band combination;
the N cells belong to a same band pair,
the N cells belong to a same frequency range;
the N cells belong to a licensed spectrum; and
the N cells belong to an unlicensed spectrum.

In addition, belonging to the preset band may be considered as belonging to a specified band, belonging to the preset band combination may be considered as belonging to a specified band combination, belonging to the preset band pair may be considered as belonging to a specified band combination, the belonging to the preset frequency range may be considered as belonging to a specified frequency range, belonging to the preset licensed spectrum may be considered as belonging to a specified licensed spectrum, and belonging to the preset unlicensed spectrum may be considered as belonging to a specified unlicensed spectrum.

In this embodiment, the frequency-domain resources of the at least two of the N cells are matched, which can increase the probability of success of multi-cell scheduling, and multi-cell scheduling is simple to implement.

Optionally, that parameters of at least two of the N cells or parameters of activated bandwidth parts BWPs of at least two of the N cells are matched includes at least one of the following:
the activated bandwidth parts BWPs of at least two of the N cells are the same in at least one of subcarrier spacing SCS, bandwidth, a number of resource blocks (Resource block, RB), and a number of resource block groups (Resource block group, RBG);
the at least two of the N cells are the same in at least one of the SCS, the bandwidth, the number of resource blocks RBs, and the number of resource block groups RBGs;
at least one of the SCS, the bandwidth, the number of RBs, and the number of RBGs of the activated BWPs of the at least two of the N cells is a preset value;
at least one of the SCS, the bandwidth, the number of RBs, and the number of RBGs of the at least two of the N cells is a preset value;
the activated BWPs of the at least two of the N cells have the SCS less than or greater than or equal to preset SCS; and
the at least two of the N cells have the SCS less than or greater than or equal to the preset SCS.

In an embodiment, BWPs of the N cells are the same in at least one of subcarrier spacing SCS, bandwidth, a number of resource blocks RBs, and a number of resource block groups RBGs.

It should be noted that the at least two of the N cells or the activated bandwidth parts BWPs of at least two of the N cells are the same in at least one of the subcarrier spacing SCS, the bandwidth, the number of resource blocks RBs, and the number of resource block groups RBGs, which is beneficial to aligning time-domain and/or frequency-domain resources.

In an embodiment, the preset SCS is SCS where the DCI is located.

Optionally, each of the N cells has at least one data channel, and the data channels of the N cells meet a second condition, the second condition including at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of bandwidth (Bandwidth, BW), a number of RBs, an RBG size, and an identifier (Identifier, ID);
at least one of BW, a number of RBs, an RBG size, and an ID of BWPs where at least two data channels are located is a preset value;
modulation and coding schemes (Modulation and coding scheme, MCS) of at least two data channels are the same;
redundant versions (Redundant version, RV) of at least two data channels are the same;
new data indicators (New Data Indicator, NDI) of at least two data channels are the same;
transport blocks (Transport Block, TB) corresponding to at least two data channels are the same;
a number of codewords corresponding to at least two data channels is the same;
a number of codewords corresponding to at least two data channels is a preset value;
at least two data channels have same priority information;
logical channels or logical channel groups (Logical Channel Group, LCG) corresponding to at least two data channels are the same;
at least two data channels have a same priority of hybrid automatic repeat request (Hybrid Automatic Repeat Request, HARQ) feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group (Code block group, CBG) indicators of at least two data channels are the same;
CBG indicators of at least two data channels are a preset value;
HARQ feedback delays of at least two data channels are the same;
at least two data channels have same space-domain information or quasi co-location (Quasi co-location, QCL) information; and
at least two data channels have same power control information.

The at least two data channels may be data channels of different ones of the N cells, or may be data channels of a same one of the N cells, or, the at least two data channels may include data channels of different ones of the N cells, and further include data channels of a same one of the N cells, which will not be limited in this embodiment.

It should be noted that the time-domain resources of the at least two data channels are the same, which is simple to implement and can reduce control signaling overheads.

In an embodiment, the time-domain resources are the same, which may include: the at least two data channels are the same in at least one of a time-domain start point, a time-domain length, and a time-domain endpoint. At least one of the time-domain start point, the time-domain length, and the time-domain endpoint mentioned above may be determined according to SCS of a reference cell, where the time-domain length may be understood as a number of occupied symbols, a number of occupied slots, and an occupied absolute duration.

In an embodiment, the reference cell mentioned above is a cell where the DCI is located, or a cell determined according to SCS of a cell and/or bwp where PDSCH and/or PUSCH are/is located.

It should be noted that the frequency-domain resources of the at least two data channels are the same, which is simple to implement and can reduce control signaling overheads.

In an embodiment, the frequency-domain resources are the same, which may include: the at least two data channels are the same in at least one of a frequency-domain start point, a frequency-domain width, and a frequency-domain endpoint. For example, the frequency-domain start points of PDSCH and/or PUSCH are at a same distance to a boundary of the BWP where they are located, which may be understood as that the frequency-domain start points are the same. The frequency-domain width may be understood as a number of occupied RBs and/or resource elements (Resource element, RE) and/or RBGs, or may be an absolute width occupied by a frequency-domain, such as MHz. The frequency-domain endpoints are the same. For example, the frequency-domain start points are at a same distance to a boundary of the BWP where they are located, which may be understood as the frequency-domain endpoints are the same.

In an embodiment, at least one of the frequency-domain start point, the frequency-domain length and the frequency-domain endpoint mentioned above is determined according to SCS of a reference cell. Optionally, the reference cell is a cell where the DCI is located, or a cell determined according to SCS of a cell and/or bwp where PDSCH and/or PUSCH are/is located.

It should be noted that the BWPs where the at least two data channels are located have same SCS, and/or the SCS of the BWPs where the at least two data channels are located is preset SCS, which is simple to implement, and can facilitate alignment of time-frequency resources. In an embodiment, BWPs where data channels of the N cells are located have same SCS.

It should be noted that the BWPs where the at least two data channels are located are the same in at least one of the BW, the number of RBs, the RBG size, and the identifier ID; and/or at least one of the BW, the number of RBs, the RBG size, and the ID of the BWPs where the at least two data channels are located is a preset value, which are\is simple to implement, and can facilitate alignment of frequency-domain resources. In an embodiment, BWPs where data channels of the N cells are located are the same in at least one of BW, a number of RBs, an RBG size, and an ID.

In addition, the MCSs of the at least two data channels are the same, which can reduce control signaling overheads. In an embodiment, MCSs of data channels of the N cells are the same.

In addition, the redundant versions RVs of the at least two data channels are the same, which can reduce control signaling overheads. In an embodiment, RVs of data channels of the N cells are the same.

In addition, the new data indicators NDIs of the at least two data channels are the same, which can reduce control signaling overheads. In an embodiment, NDIs of data channels of the N cells are the same.

It should be noted that the transport blocks TBs corresponding to the at least two data channels are the same, so that multi-cell scheduling is simple to implement, and the transmission reliability is increased through frequency-domain repetition. In an embodiment, TBs corresponding to data channels of the N cells are the same.

It should be noted that the number of codewords corresponding to the at least two data channels is the same, and/or the number of the codewords corresponding to the at least two data channels is a preset value, which can reduce control signaling overheads. In an embodiment, a number of codewords corresponding to data channels of the N cells is the same.

In addition, the at least two data channels have same priority information, which can reduce control signaling overheads. In an embodiment, data channels of the N cells have same priority information. The data channels of the N cells have same priority information, which may be that the data channels all have priority indexes (priority index) and the priority indexes are all 0 or the priority indexes are all 1. Alternatively, it may be that none of the data channels have the priority index.

It should be noted that the logical channels or logical channel groups LCGs corresponding to the at least two data channels are the same, which can reduce control signaling overheads. In an embodiment, logical channels or logical channels groups LCGs corresponding to data channels of the N cells are the same.

It should be noted that the at least two data channels have a same priority of HARQ feedback, which can reduce control signaling overheads. In an embodiment, data channels of the N cells have a same priority of HARQ feedback.

In addition, the at least two data channels have a same antenna port or precoding (precoding), which can reduce control signaling overheads. In an embodiment, data channels of the N cells have a same antenna port or precoding.

In addition, the at least two data channels have a same panel which can reduce control signaling overheads. In an embodiment, data channels of the N cells have a same panel.

In addition, the channel access types corresponding to the at least two data channels are the same, and/or the channel access classes are the same; and/or the channel access types corresponding to the at least two data channels are a preset type, and/or the channel access classes are a preset grade, which can reduce control signaling overheads. In an embodiment, channel access types corresponding to data channels of the N cells are the same, and/or channel access classes are the same.

In addition, the HARQ process identifiers (PROCESS ID) of the at least two data channels are the same, and/or are consecutive, and/or have an association relationship, which can reduce control signaling overheads. In an embodiment, HARQ process identifiers of data channels of the N cells are the same, and/or are consecutive, and/or have an association relationship. The HARQ PROCESS ID has an association relationship, which may be that the HARQ PROCESS ID is a process identifier in a HARQ PROCESS ID list configured for a high level, or may be a set of HARQ PROCESS IDs with equal difference.

In addition, the CBG indicators of the at least two data channels are the same, and/or the CBG indicators of the at least two data channels are a preset value, which can reduce control signaling overheads. In an embodiment, CBG indicators of data channels of the N cells are the same.

It should be noted that the HARQ feedback delays of the at least two data channels are the same, which can reduce control signaling overheads. In an embodiment, HARQ feedback delays of data channels of the N cells are the same. The feedback delays are the same, which may be that: a number of symbols and/or a number of slots and/or absolute durations corresponding to the feedback delay are the same, or feedback is performed corresponding to a same PUCCH or PUSCH.

It should be noted that the at least two data channels have same space-domain information or QCL information, which can reduce control signaling overheads. In an embodiment, data channels of the N cells have same space-domain information or QCL information. For example, QCL resources and/or transmission configuration indicators (Transmission Configuration Indicator, TCI) of the at least two data channels are the same.

It should be noted that the at least two data channels have same power control information, which can reduce control signaling overheads. In an embodiment, data channels of the N cells have same power control information. The power control information mentioned above includes at least one of a reference signal (Reference Signal, RS), P0, and alpha for calculating a path loss.

Optionally, the data channel includes at least one of the following:
a physical downlink shared channel PDSCH; and
a physical uplink shared channel PUSCH.

In an embodiment, the data channels may all be uplink data channels, or the data channels may all be downlink data channels, or the data channels may include an uplink data channel and a downlink data channel.

In this embodiment of this application, N cells are scheduled for transmission by a DCI, which can reduce control signaling overheads; and the characteristic of scheduling PUSCHs and/or PDSCHs of multiple cells with a DCI is introduced by extension, and a scheduling restriction is defined, which can guarantee the performance of the PDCCH and increase coverage.

Optionally, the DCI meet a third condition, the third condition including at least one of the following:
the DCI is DCI in a preset format;
the DCI is DCI within a preset search space;
the DCI is DCI of a preset control channel element (Control Channel Element, CCE);
the DCI is DCI at a preset aggregation level (Aggregation level, AL);
the DCI does not support simultaneous BWP switching and multi-cell scheduling; and
the DCI indicates that IDs of BWPs to be switched to in different cells are the same.

It should be noted that the DCI is DCI in a preset format; the DCI is DCI within a preset search space; and/or the DCI is DCI of a preset control channel element CCE; and/or the DCI is DCI at a preset aggregation level AL, so that multi-cell scheduling is simple to implement.

In addition, the DCI does not support simultaneous BWP switching and multi-cell scheduling, which may be that the UE does not support simultaneous BWP switching and multi-cell scheduling with this DCI, which can make multi-cell scheduling simple to implement.

In addition, the DCI indicates that IDs of BWPs to be switched to in different cells are the same, and thus, this DCI can indicate that the BWP of each cell is switched to the BWP with the same ID in each cell, so that the multi-cell scheduling is simple to implement, and control signaling overheads can be reduced.

It should be noted that the first condition, and/or the second condition, and/or the third condition may be determined according to network configuration, and/or protocol provisions, and/or UE capabilities.

Optionally, the method further includes:
transmitting, by the terminal, target information to the network-side device, the target information being used for indicating any one of the following:
a type of the terminal;
a target condition supported by the terminal, where target condition is at least one of the following: the first condition, the second condition, and the third condition.

There are at least two types of UE, such as UE type 1 and UE type 2, and the first condition, the second condition and the third condition supported by different types of UE are at least partially different.

In an embodiment, the terminal indicates the type of the terminal to a base station and/or the terminal indicates the target condition supported by the terminal to the base station.

Optionally, the method further includes:
determining, by the terminal, any one of the following in a case that a capability of the terminal and/or configuration on a network side does not support the target condition:
the scheduling with the DCI is invalid;
the scheduling with the DCI is invalid in some of the cells;
the target condition is at least one of the following: the first condition, the second condition, and the third condition.

If the terminal determines that the scheduling with the DCI is invalid, then the terminal will not perform corresponding transmission. If the terminal determines that the scheduling with the DCI is invalid in some cells, then the terminal is invalid in some transmissions. In an embodiment, the terminal only performs some transmissions within its capability range.

In an embodiment, when the configuration on the network side and/or the scheduling with the DCI exceed the capability of the UE, it can be determined that the scheduling with the DCI is invalid, or the scheduling with the DCI is invalid in some cells.

In an embodiment, in a case that the terminal determines according to its own capability limitations that it cannot meet the network configuration or the conditions of protocol provisions:
the terminal determines that the multi-cell scheduling indicated by the network configuration and/or the DCI is invalid; or
the terminal determines that some of the multi-cell scheduling indicated by the network configuration and/or the DCI is invalid.

Thus, the multi-cell scheduling in a scenario where the terminal cannot meet the scheduling of the network-side device due to its own capability limitations is implemented.

It should be noted that the terminal only performs some of transmissions within its capability range, which may be that the terminal performs transmission by the maximum upper limit of its capability range, or the terminal decides itself to perform transmission by less than or equal to the maximum upper limit of its capability range.

In an embodiment, in a case that the scheduling of the network-side device cannot meet the network configuration or the conditions of protocol provisions:
the terminal determines that the multi-cell scheduling indicated by the network configuration and/or the DCI is invalid;
   or
the terminal determines that some of the multi-cell scheduling indicated by the network configuration and/or the DCI is invalid.

Thus, the multi-cell scheduling in a scenario where the scheduling of the network-side device cannot meet the requirements of the network configuration is implemented.

Optionally, the some of the cells include a first cell, where
a number of cells of which the scheduling is supported by the terminal is less than that of cells scheduled with the DCI; and/or
the first cell is in an inactive state or a dormant state; and/or
a data channel of the first cell conflicts with time division duplex TDD pattern configuration; and/or
SCS of an activated BWP of the first cell is different from that of activated BWPs of the remaining cells; and/or
a BWP ID of the activated BWP of the first cell is different from those of the activated BWPs of the remaining cells; and/or
the activated BWP of the first cell is greater or less than reference SCS.

For example, the base station configures that cell group 1 where cell 1 is located may support multi-cell scheduling. When the DCI contains scheduling information of 4 cells in the cell group 1, but a terminal 1 reports by its capability that scheduling of up to 2 cells is supported, then the terminal 1 considers that first or last S bits of scheduling information of 2 specified cells are invalid, and only 2 cells are scheduled. Thus, when a number of cells of which the scheduling is supported by the capability of the terminal is less than a number of cells scheduled by the DCI, the terminal determines that the scheduling with the DCI is invalid in some of cells.

For example, the base station configures that the cell group 1 may support multi-cell scheduling. The cell group 1 includes cell1, cell2, and cell3. When multi-cell scheduling is implemented, cell1 and cell2 are in an inactive state or dormant state, and cell3 is in an active state. The terminal only schedules cell3, and considers that current scheduling of cell1 and cell2 is invalid. Thus, when the first cell in the cells scheduled with the DCI is in an inactive or dormant state, the terminal determines that the scheduling with the DCI is invalid in the first cell.

For example, the DCI schedules cell1 and cell2, and the target conditions that need to be met include: time-domain positions are the same; cell1 and cell2 are different in TDD configuration; and when PDSCH and/or PUSCH of cell1 do not conflict with the tdd configuration, but PDSCH and/or PUSC of cell2 conflict with the tdd configuration, the terminal may not receive and/or transmit data from cell1 and cell2; or the terminal may only receive and/or transmit data from cell1 and not receive and/or transmit data from cell2. Thus, when a data channel of a cell in the cells scheduled with the DCI conflicts with the TDD pattern configuration, the terminal determines that the scheduling with the DCI is invalid, or the scheduling with the DCI is invalid in some of cells.

For example, the DCI schedules cell1, cell2, and cell3, and the target conditions that need to be met include: activated BWPs have same SCS; activated BWPs of cell1 and cell2 have same SCS, and are different from cell3 in SCS; and the terminal may not receive and/or transmit data from cell1, cell2, and cell3, or only receive and/or transmit data from cell1 and cell2, and not receive and/or transmit data from cell3. Thus, when SCS and/or a BWP ID of the activated BWP of a cell in the cells scheduled with the DCI are/is different from SCS and/or BWP IDs of the activated BWPs of the remaining cells, the terminal determines that the scheduling with the DCI is invalid, or the scheduling with the DCI is invalid in some of the cells.

For example, the DCI schedules cell1 and cell2, and the target conditions that need to be met include: activated BWPs of cell1 and cell2 have SCS less than that of a BWP where the DCI is located; the activated BWP of cell1 has SCS less than that of the BWP where the DCI is located, but the activated BWP of cell2 has SCS greater than that of the BWP where the DCI is located; and the terminal may not receive and/or transmit data from cell1 and cell2, or may only receive and/or transmit data from cell1 and not receive and/or transmit data from cell2. Thus, when an activated BWP of a cell in the cells scheduled with the DCI does not meet the target condition, the terminal determines that the scheduling with the DCI is invalid, or the scheduling with the DCI is invalid in some of the cells.

Optionally, the terminal expects that sending or receiving of at least one PDSCH and/or PUSCH in all PDSCHs and/or PUSCHs scheduled in the N cells meets the target condition, where the target condition is at least one of the following: the first condition, the second condition, and the third condition.

Optionally, configuration or activation for multi-cell scheduling of the N cells with a DCI is based on any one of the following:
a cell group;
a PUCCH cell group; and
a cell.

In an embodiment, the multi-cell scheduling is based on the configuration and/or activation of the cell group (cell group) and/or the PUCCH cell group. For example, a certain cell group and/or PUCCH cell group is configured and/or activated for multi-cell scheduling, which indicates that at least two cells within the cell group and/or the PUCCH cell group can be scheduled with a DCI. The configuration and/or activation may be implemented by at least one of the ways indicated by high-level parameters, MAC CE, and DCI.

Optionally, at least two cells within a target cell group or a target PUCCH cell group are scheduled with the DCI, where the target cell group or the target PUCCH cell group is a cell group which has been configured or activated for multi-cell scheduling.

Optionally, the DCI is used for scheduling cells in at least one cell list in a cell group.

It should be noted that the multi-cell scheduling is based on the configuration and/or activation of the cell group, and a high level may be configured with at least one cell list, and at least one cell list in the cell group can be scheduled simultaneously with a DCI.

For example, a certain cell group and/or PUCCH cell group is configured and/or activated for multi-cell scheduling, and 2 cell lists are configured, which indicates that at least two cells in each cell list can be scheduled with a DCI. The configuration and/or activation may be by at least one of the ways indicated by high-level parameters, MAC CE, and DCI.

Optionally, before receiving the DCI by the terminal, the method further includes:
transmitting, by the terminal, a capability of the terminal to the network-side device.

The capability of the terminals includes at least one of the following:
supporting at least one of a band (band), a carrier (carrier), a BWP, a cell group, a PUCCH cell group, a resource pool (resource pool), and a frequency range (Frequency Range) set used for scheduling of the N cells;
supporting types of the scheduling of the N cells; and
supporting DCI fields shared in different cells, and/or supporting independent DCI fields in different cells.

The shared DCI field mentioned above and/or the independent DCI field mentioned above are/is configured and/or indicated based on each band and/or carrier.

Optionally, the supporting types of the scheduling of the N cells includes at least one of the following:
the cell is of intra-band (intra-band) carrier aggregation;
the cell is of inter-band (inter-band) carrier aggregation;
a timing advance group of the cell is a single-TAG (single-TAG); and
a timing advance group of the cell is a multi-TAG (multi-TAG).

In this embodiment of this application, N cells are scheduled for transmission by a DCI, which can reduce control signaling overheads; and the characteristic of scheduling PUSCHs and/or PDSCHs of multiple cells with a DCI is introduced by extension, and a scheduling restriction is defined, which can guarantee the performance of the PDCCH and increase coverage.

Referring to FIG. 3, FIG. 3 is a flowchart of an information transmitting method provided in an embodiment of this application. As shown in FIG. 3, the information transmitting method includes the following step:

Step 201: A network-side device transmits downlink control information DCI to a terminal, where the DCI is used for scheduling N cells for transmission, N being an integer greater than 1.

Optionally, the N cells meet a first condition, the first condition including at least one of the following:
each of the N cells has at least one data channel or reference signal;
at least two of the N cells belong to a same cell group;
at least two of the N cells belong to a preset cell group;
at least two of the N cells belong to a same timing advance group TAG;
working modes of at least two of the N cells are matched;
frequency-domain resources of at least two of the N cells are matched;
at least two of the N cells belong to a same physical uplink control channel PUCCH cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; where
N is less than or equal to a preset value.

Optionally, each of the N cells has at least one data channel, and the data channels of the N cells meet a second condition, the second condition including at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of BW, a number of RBs, an RBG size, and an identifier ID;
at least one of BW, a number of RBs, an RBG size, and an ID of BWPs where at least two data channels are located is a preset value;
modulation and coding schemes MCSs of at least two data channels are the same;
redundant versions RVs of at least two data channels are the same;
new data indicators NDIs of at least two data channels are the same;
transport blocks TBs corresponding to at least two data channels are the same;
a number of codewords corresponding to at least two data channels is the same;
a number of codewords corresponding to at least two data channels is a preset value;
at least two data channels have same priority information;
logical channels or logical channel groups LCGs corresponding to at least two data channels are the same;
at least two data channels have a same priority of hybrid automatic repeat request HARQ feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group CBG indicators of at least two data channels are the same;
CBG indicators of at least two data channels are a preset value;
HARQ feedback delays of at least two data channels are the same;
at least two data channels have same space-domain information or quasi co-location QCL information; and
at least two data channels have same power control information.

Optionally, the DCI meet a third condition, the third condition including at least one of the following:
the DCI is DCI in a preset format;
the DCI is DCI within a preset search space;
the DCI is DCI of a preset control channel element CCE;
the DCI is DCI at a preset aggregation level AL;
the DCI does not support simultaneous BWP switching and multi-cell scheduling; and
the DCI indicates that IDs of BWPs to be switched to in different cells are the same.

It should be noted that as an implementation of a corresponding network-side device in the embodiment shown in FIG. 2, a specific implementation of this embodiment may refer to related descriptions in the embodiment shown in FIG. 2, which will not be repeated here in order to avoid repetition. In this way, signaling overheads can be reduced by scheduling N cells for transmission with the DCI.

In the information receiving method provided in this embodiment of this application, the execution subject may be an information receiving apparatus. In embodiments of this application, the information receiving apparatus provided in the embodiments of this application is illustrated by taking the information receiving apparatus executing the information receiving method as an example.

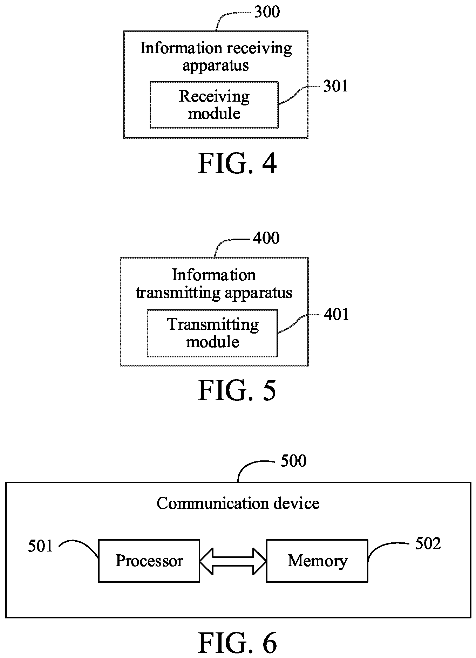

Referring to FIG. 4, FIG. 4 is a structural diagram of an information receiving apparatus provided in an embodiment of this application. As shown in FIG. 4, the information receiving apparatus 300 includes:
a receiving module 301, configured to receive downlink control information DCI transmitted by a network-side device, where the DCI is used for scheduling N cells for transmission, N being an integer greater than 1.

Optionally, the N cells meet a first condition, the first condition including at least one of the following:
each of the N cells has at least one data channel or reference signal;
at least two of the N cells belong to a same cell group;
at least two of the N cells belong to a preset cell group;
at least two of the N cells belong to a same timing advance group TAG;
working modes of at least two of the N cells are matched;
frequency-domain resources of at least two of the N cells are matched;
at least two of the N cells belong to a same physical uplink control channel PUCCH cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; where
N is less than or equal to a preset value.

Optionally, that working modes of at least two of N cells are matched includes at least one of the following:
time division duplex patterns of the at least two of the N cells are the same, and/or the time division duplex patterns of the at least two of the N cells are a preset pattern; and
half-duplex modes of the at least two of the N cells are the same, and/or the half-duplex modes of the at least two of the N cells are a preset mode.

Optionally, that frequency-domain resources of at least two of the N cells are matched includes at least one of the following:
the at least two of the N cells belong to a same band;
the at least two of the N cells belong to a same band combination;
the at least two of the N cells belong to a same band pair;
the at least two of the N cells belong to a same frequency range;
the at least two of the N cells belong to a licensed spectrum;
the at least two of the N cells belong to an unlicensed spectrum;
the at least two of the N cells belong to a preset band;
the at least two of the N cells belong to a preset band combination;
the at least two of the N cells belong to a preset band pair;
the at least two of the N cells belong to a preset frequency range;
the at least two of the N cells belong to a preset licensed spectrum; and
the at least two of the N cells belong to a preset unlicensed spectrum.

Optionally, that parameters of at least two of the N cells or parameters of activated bandwidth parts BWPs of at least two of the N cells are matched includes at least one of the following:
the activated bandwidth parts BWPs of the at least two of the N cells are the same in at least one of subcarrier spacing SCS, bandwidth, a number of resource blocks RBs, and a number of resource block groups RBGs;
the at least two of the N cells are the same in at least one of the SCS, the bandwidth, the number of resource blocks RBs, and the number of resource block groups RBGs;
at least one of the SCS, the bandwidth, the number of RBs, and the number of RBGs of the activated BWPs of the at least two of the N cells is a preset value;
at least one of the SCS, the bandwidth, the number of RBs, and the number of RBGs of the at least two of the N cells is a preset value;
the activated BWPs of the at least two of the N cells have the SCS less than or greater than or equal to preset SCS; and
the at least two of the N cells have the SCS less than or greater than or equal to the preset SCS.

Optionally, each of the N cells has at least one data channel, and the data channels of the N cells meet a second condition, the second condition including at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of BW, a number of RBs, an RBG size, and an identifier ID;
at least one of BW, a number of RBs, an RBG size, and an ID of BWPs where at least two data channels are located is a preset value;
modulation and coding schemes MCSs of at least two data channels are the same;
redundant versions RVs of at least two data channels are the same;
new data indicators NDIs of at least two data channels are the same;
transport blocks TBs corresponding to at least two data channels are the same;
a number of codewords corresponding to at least two data channels is the same;
a number of codewords corresponding to at least two data channels is a preset value;
at least two data channels have same priority information;
logical channels or logical channel groups LCGs corresponding to at least two data channels are the same;
at least two data channels have a same priority of hybrid automatic repeat request HARQ feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group CBG indicators of at least two data channels are the same;
CBG indicators of at least two data channels are a preset value;
HARQ feedback delays of at least two data channels are the same;
at least two data channels have same space-domain information or quasi co-location QCL information; and
at least two data channels have same power control information.

Optionally, the data channel includes at least one of the following:
a physical downlink shared channel PDSCH; and
a physical uplink shared channel PUSCH.

Optionally, the DCI meet a third condition, the third condition including at least one of the following:
the DCI is DCI in a preset format;
the DCI is DCI within a preset search space;
the DCI is DCI of a preset control channel element CCE;
the DCI is DCI at a preset aggregation level AL;
the DCI does not support simultaneous BWP switching and multi-cell scheduling; and
the DCI indicates that IDs of BWPs to be switched to in different cells are the same.

Optionally, the apparatus further includes:
a first transmitting module, configured to transmit target information to the network-side device, where the target information is used for indicating any one of the following:
a type of the terminal;
a target condition supported by the terminal, where target condition is at least one of the following: the first condition, the second condition, and the third condition.

Optionally, the apparatus further includes:
a determination module, configured to determine any one of the following in a case that a capability of the terminal and/or configuration on a network side does not support the target condition:
the scheduling with the DCI is invalid;
the scheduling with the DCI is invalid in some of the cells;
the target condition is at least one of the following: the first condition, the second condition, and the third condition.

Optionally, the some of the cells include a first cell, where
a number of cells of which the scheduling is supported by the terminal is less than that of cells scheduled with the DCI; and/or
the first cell is in an inactive state or a dormant state; and/or
a data channel of the first cell conflicts with time division duplex TDD pattern configuration; and/or
SCS of an activated BWP of the first cell is different from that of activated BWPs of the remaining cells; and/or
a BWP ID of the activated BWP of the first cell is different from those of the activated BWPs of the remaining cells; and/or
the activated BWP of the first cell is greater or less than reference SCS.

Optionally, the terminal expects that sending or receiving of at least one PDSCH and/or PUSCH in all PDSCHs and/or PUSCHs scheduled in the N cells meets the target condition, where the target condition is at least one of the following: the first condition, the second condition, and the third condition.

Optionally, configuration or activation for multi-cell scheduling of the N cells with a DCI is based on any one of the following:
a cell group;
a PUCCH cell group; and
a cell.

Optionally, at least two cells within a target cell group or a target PUCCH cell group are scheduled with the DCI, where the target cell group or the target PUCCH cell group is a cell group which has been configured or activated for multi-cell scheduling.

Optionally, the DCI is used for scheduling cells in at least one cell list in a cell group.

Optionally, the apparatus further includes:
a second transmitting module, configured to transmit the capability of the terminal to the network-side device.

The capability of the terminals includes at least one of the following:
supporting at least one of a band, a carrier, a BWP, a cell group, a PUCCH cell group, a resource pool, and a frequency range set used for the scheduling of the N cells;
supporting types of the scheduling of the N cells; and
supporting DCI fields shared in different cells, and/or supporting independent DCI fields in different cells.

Optionally, the supporting types of the scheduling of the N cells includes at least one of the following:
the cell is of intra-band carrier aggregation;
the cell is of inter-band carrier aggregation;
a timing advance group of the cell is a single-TAG; and
a timing advance group of the cell is a multi-TAG.

According to the information receiving apparatus in this embodiment of this application, N cells are scheduled for transmission with the DCI, so that signaling overheads can be reduced.

The information receiving apparatus in this embodiment of this application may be an electronic device, such as an electronic device with an operating system, or a component such as an integrated circuit or a chip in the electronic device. The electronic device may be a terminal or other devices other than the terminal. For example, the terminal may include, but is not limited to, the types of terminal 11 listed above, and other devices may be a server, a network attached storage (Network Attached Storage, NAS), and the like, which are not specifically limited in this embodiment of this application.

The information receiving apparatus provided in this embodiment of this application can implement various processes implemented in the method embodiment illustrated in FIG. 2, and the same technical effect is achieved, which will not be repeated here in order to avoid repetition.

Referring to FIG. 5, FIG. 5 is a structural diagram of an information receiving apparatus provided in an embodiment of this application. As shown in FIG. 5, the information receiving apparatus 400 includes:
a transmitting module 401, configured to transmit downlink control information DCI to a terminal, where the DCI is used for scheduling N cells for transmission, N being an integer greater than 1.

Optionally, the N cells meet a first condition, the first condition including at least one of the following:
each of the N cells has at least one data channel or reference signal;
at least two of the N cells belong to a same cell group;
at least two of the N cells belong to a preset cell group;
at least two of the N cells belong to a same timing advance group TAG;
working modes of at least two of the N cells are matched;
frequency-domain resources of at least two of the N cells are matched;
at least two of the N cells belong to a same physical uplink control channel PUCCH cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; where
N is less than or equal to a preset value.

Optionally, each of the N cells has at least one data channel, and the data channels of the N cells meet a second condition, the second condition including at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of BW, a number of RBs, an RBG size, and an identifier ID;
at least one of BW, a number of RBs, an RBG size, and an ID of BWPs where at least two data channels are located is a preset value;
modulation and coding schemes MCSs of at least two data channels are the same;
redundant versions RVs of at least two data channels are the same;
new data indicators NDIs of at least two data channels are the same;
transport blocks TBs corresponding to at least two data channels are the same;
a number of codewords corresponding to at least two data channels is the same;
a number of codewords corresponding to at least two data channels is a preset value;
at least two data channels have same priority information;
logical channels or logical channel groups LCGs corresponding to at least two data channels are the same;
at least two data channels have a same priority of hybrid automatic repeat request HARQ feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group CBG indicators of at least two data channels are the same;
CBG indicators of at least two data channels are a preset value;
HARQ feedback delays of at least two data channels are the same;
at least two data channels have same space-domain information or quasi co-location QCL information; and
at least two data channels have same power control information.

Optionally, the DCI meet a third condition, the third condition including at least one of the following:
the DCI is DCI in a preset format;
the DCI is DCI within a preset search space;
the DCI is DCI of a preset control channel element CCE;
the DCI is DCI at a preset aggregation level AL;
the DCI does not support simultaneous BWP switching and multi-cell scheduling; and
the DCI indicates that IDs of BWPs to be switched to in different cells are the same.

According to the information transmitting apparatus in this embodiment of this application, N cells are scheduled for transmission with the DCI, so that signaling overheads can be reduced.

The information transmitting apparatus in this embodiment of this application may be an electronic device, such as an electronic device with an operating system, or a component such as an integrated circuit or a chip in the electronic device. The electronic device may be a terminal or other devices other than the terminal. For example, the terminal may include, but is not limited to, the types of terminal 11 listed above, and other devices may be a server, a network attached storage (Network Attached Storage, NAS), and the like, which are not specifically limited in this embodiment of this application.

The information transmitting apparatus provided in this embodiment of this application can implement various processes implemented in the method embodiment illustrated in FIG. 3, and the same technical effect is achieved, which will not be repeated here in order to avoid repetition.

Optionally, as shown in FIG. 6, an embodiment of this application further provides a communication device 500, including a processor 501 and a memory 502, where the memory 502 stores a program and instruction runnable on the processor 501. For example, when the communication device 500 is a terminal, the program or instruction, when executed by the processor 501, implements the various steps of the information receiving method embodiment mentioned above, and the same technical effect can be achieved. When the communication device 500 is a network-side device, the program or instruction, when executed by the processor 501, implements the various steps of the information transmitting method embodiment mentioned above, and the same technical effect can be achieved, which will not be described in detail herein again to avoid repetition.

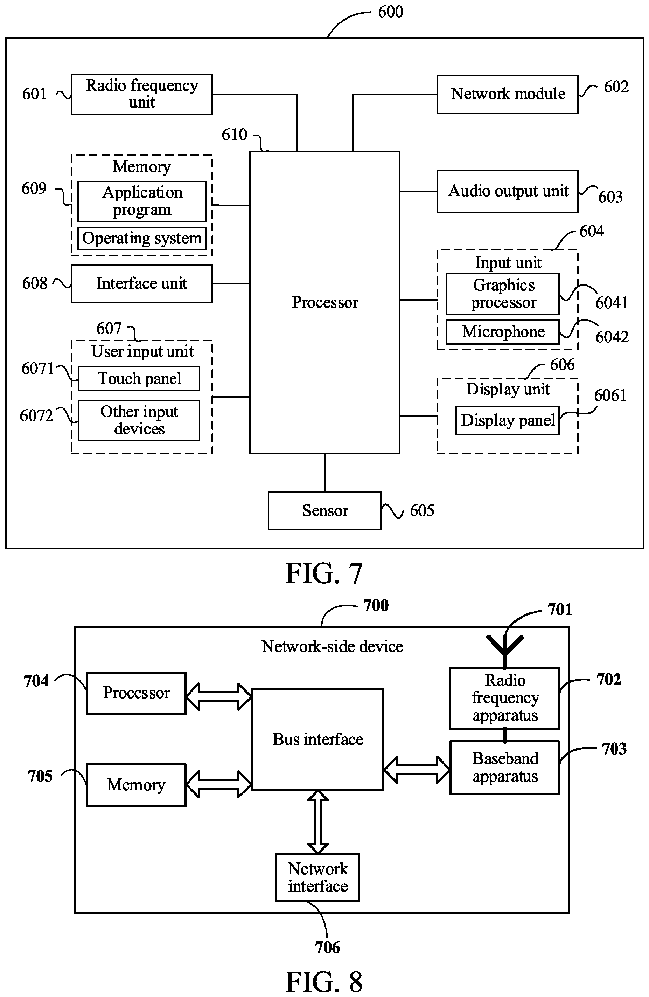

An embodiment of this application further provides a terminal, including a processor and a communication interface. The communication interface is configured to receive downlink control information DCI transmitted by a network-side device, where the DCI is used for scheduling N cells for transmission, N being an integer greater than 1. This terminal embodiment corresponds to the information receiving method embodiment mentioned above. The various implementation processes and modes of the information receiving method embodiment mentioned above are applicable to this terminal embodiment, and the same technical effect can be achieved. Specifically, FIG. 7 is a structural schematic diagram of hardware for implementing a terminal in an embodiment of this application.

The terminal 600 includes, but is not limited to: at least some of components such as a radio frequency unit 601, a network module 602, an audio output unit 603, an input unit 604, a sensor 605, a display unit 606, a user input unit 607, an interface unit 608, a memory 609, and a processor 610.

Those skilled in the art can understand that the terminal 600 may further include a power supply (such as a battery) that supplies power to various components. The power supply may be logically connected to the processor 610 through a power management system, thus implementing functions of charging management, discharging management, and power consumption management through the power management system. A terminal structure shown in FIG. 7 does not constitute limitation on the terminal, and the terminal may include more or fewer components than shown, or some components are combined, or a different component arrangement may be used, which will not be repeated here.

It should be understood that in this embodiment of this application, the input unit 604 may include a graphics processing unit (Graphics Processing Unit, GPU) 6041 and a microphone 6042, and the graphics processing unit 6041 processes image data of a static picture or video obtained by an image capturing apparatus (such as a camera) in a video capture mode or an image capture mode. The display unit 606 may include a display panel 6061, which may be configured in the form of a liquid crystal display, an organic lightemitting diode, etc. The user input unit 607 includes at least one of a touch panel 6071 and other input devices 6072. The touch panel 6071 is also referred to as a touch screen. The touch panel 6071 may include two parts: a touch detecting apparatus and a touch controller. Other input devices 6072 may include, but are not limited to, a physical keyboard, function keys (such as volume control keys and switch keys), a trackball, a mouse, and a joystick, which will not be repeated here.

In this embodiment of this application, after receiving downlink data from the network-side device, the radio frequency unit 601 can transmit the downlink data to the processor 610 for processing. In addition, the radio frequency unit 601 can transmit uplink data to the network-side device. Generally, the radio frequency unit 601 includes, but is not limited to, an antenna, an amplifier, a transceiver, a coupler, a low noise amplifier, a duplexer, and the like.

The memory 609 may be configured to store a software program or instruction and various data. The memory 609 may mainly include a first storage area for storing a program or instruction, and a second storage area for storing data, where the first storage area may store an operating system, at least one application program or instruction required for a function (such as a sound playback function and an image playback function), etc. Furthermore, the memory 609 may include a volatile memory or a non-volatile memory, or the memory 609 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM) a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct Rambus RAM (Direct Rambus RAM, DRRAM). The memory 609 in this embodiment of this application includes, but is not limited to, these memories and any other suitable types of memories.

The processor 610 may include one or more processing units. Optionally, the processor 610 integrates an application processor and a modem processor, where the application processor mainly processes operations related to an operating system, a user interface, an application program, and the like, and the modem processor mainly processes wireless communication signals, and is, for example, a baseband processor. It can be understood that the modem processor mentioned above may also not be integrated into the processor 610.

The radio frequency unit 601 is configured to receive downlink control information DCI transmitted by a network-side device, where the DCI is used for scheduling N cells for transmission, N being an integer greater than 1.

Optionally, the N cells meet a first condition, the first condition including at least one of the following:
each of the N cells has at least one data channel or reference signal;
at least two of the N cells belong to a same cell group;
at least two of the N cells belong to a preset cell group;
at least two of the N cells belong to a same timing advance group TAG;
working modes of at least two of the N cells are matched;
frequency-domain resources of at least two of the N cells are matched;
at least two of the N cells belong to a same physical uplink control channel PUCCH cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; where
N is less than or equal to a preset value.

Optionally, that working modes of at least two of N cells are matched includes at least one of the following:
time division duplex patterns of the at least two of the N cells are the same, and/or the time division duplex patterns of the at least two of the N cells are a preset pattern; and
half-duplex modes of the at least two of the N cells are the same, and/or the half-duplex modes of the at least two of the N cells are a preset mode.

Optionally, that frequency-domain resources of at least two of the N cells are matched includes at least one of the following:
the at least two of the N cells belong to a same band;
the at least two of the N cells belong to a same band combination;
the at least two of the N cells belong to a same band pair;
the at least two of the N cells belong to a same frequency range;
the at least two of the N cells belong to a licensed spectrum;
the at least two of the N cells belong to an unlicensed spectrum;
the at least two of the N cells belong to a preset band;
the at least two of the N cells belong to a preset band combination;
the at least two of the N cells belong to a preset band pair;
the at least two of the N cells belong to a preset frequency range;
the at least two of the N cells belong to a preset licensed spectrum; and
the at least two of the N cells belong to a preset unlicensed spectrum.

Optionally, that parameters of at least two of the N cells or parameters of activated bandwidth parts BWPs of at least two of the N cells are matched includes at least one of the following:
the activated bandwidth parts BWPs of the at least two of the N cells are the same in at least one of subcarrier spacing SCS, bandwidth, a number of resource blocks RBs, and a number of resource block groups RBGs;
the at least two of the N cells are the same in at least one of the SCS, the bandwidth, the number of resource blocks RBs, and the number of resource block groups RBGs;
at least one of the SCS, the bandwidth, the number of RBs, and the number of RBGs of the activated BWPs of the at least two of the N cells is a preset value;
at least one of the SCS, the bandwidth, the number of RBs, and the number of RBGs of the at least two of the N cells is a preset value;
the activated BWPs of the at least two of the N cells have the SCS less than or greater than or equal to preset SCS; and
the at least two of the N cells have the SCS less than or greater than or equal to the preset SCS.

Optionally, each of the N cells has at least one data channel, and the data channels of the N cells meet a second condition, the second condition including at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of BW, a number of RBs, an RBG size, and an identifier ID;
at least one of BW, a number of RBs, an RBG size, and an ID of BWPs where at least two data channels are located is a preset value;
modulation and coding schemes MCSs of at least two data channels are the same;
redundant versions RVs of at least two data channels are the same;
new data indicators NDIs of at least two data channels are the same;
transport blocks TBs corresponding to at least two data channels are the same;
a number of codewords corresponding to at least two data channels is the same;
a number of codewords corresponding to at least two data channels is a preset value;
at least two data channels have same priority information;
logical channels or logical channel groups LCGs corresponding to at least two data channels are the same;
at least two data channels have a same priority of hybrid automatic repeat request HARQ feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group CBG indicators of at least two data channels are the same;
CBG indicators of at least two data channels are a preset value;
HARQ feedback delays of at least two data channels are the same;
at least two data channels have same space-domain information or quasi co-location QCL information; and
at least two data channels have same power control information.

Optionally, the data channel includes at least one of the following:
a physical downlink shared channel PDSCH; and
a physical uplink shared channel PUSCH.

Optionally, the DCI meet a third condition, the third condition including at least one of the following:
the DCI is DCI in a preset format;
the DCI is DCI within a preset search space;
the DCI is DCI of a preset control channel element CCE;
the DCI is DCI at a preset aggregation level AL;
the DCI does not support simultaneous BWP switching and multi-cell scheduling; and
the DCI indicates that IDs of BWPs to be switched to in different cells are the same.

Optionally, the radio frequency unit 601 is further configured to:
transmit target information to the network-side device, where the target information is used for indicating any one of the following:
a type of the terminal;
a target condition supported by the terminal, where target condition is at least one of the following: the first condition, the second condition, and the third condition.

Optionally, the processor 610 is further configured to:
determine any one of the following in a case that a capability of the terminal and/or configuration on a network side does not support the target condition:
the scheduling with the DCI is invalid;
the scheduling with the DCI is invalid in some of the cells;
the target condition is at least one of the following: the first condition, the second condition, and the third condition.

Optionally, the some of the cells include a first cell, where
a number of cells of which the scheduling is supported by the terminal is less than that of cells scheduled with the DCI; and/or
the first cell is in an inactive state or a dormant state; and/or
a data channel of the first cell conflicts with time division duplex TDD pattern configuration; and/or
SCS of an activated BWP of the first cell is different from that of activated BWPs of the remaining cells; and/or
a BWP ID of the activated BWP of the first cell is different from those of the activated BWPs of the remaining cells; and/or
the activated BWP of the first cell is greater or less than reference SCS.

Optionally, the terminal expects that sending or receiving of at least one PDSCH and/or PUSCH in all PDSCHs and/or PUSCHs scheduled in the N cells meets the target condition, where the target condition is at least one of the following: the first condition, the second condition, and the third condition.

Optionally, configuration or activation for multi-cell scheduling of the N cells with a DCI is based on any one of the following:
a cell group;
a PUCCH cell group; and
a cell.

Optionally, at least two cells within a target cell group or a target PUCCH cell group are scheduled with the DCI, where the target cell group or the target PUCCH cell group is a cell group which has been configured or activated for multi-cell scheduling.

Optionally, the DCI is used for scheduling cells in at least one cell list in a cell group.

Optionally, the radio frequency unit 601 is further configured to:
transmitting a capability of the terminal to a network-side device.

The capability of the terminals include at least one of the following:
supporting at least one of a band, a carrier, a BWP, a cell group, a PUCCH cell group, a resource pool, and a frequency range set used for the scheduling of the N cells;
supporting types of the scheduling of the N cells; and
supporting DCI fields shared in different cells, and/or supporting independent DCI fields in different cells.

Optionally, the supporting types of the scheduling of the N cells includes at least one of the following:
the cell is of intra-band carrier aggregation;
the cell is of inter-band carrier aggregation;
a timing advance group of the cell is a single-TAG; and
a timing advance group of the cell is a multi-TAG.

An embodiment of this application further provides a network-side device, including a processor and a communication interface, where the communication interface is configured to: transmit downlink control information DCI to a terminal, where the DCI is used for scheduling N cells for transmission, N being an integer greater than 1. This network-side device embodiment corresponds to the information transmitting method embodiment mentioned above. The various implementation processes and modes of the information transmitting method embodiment mentioned above are applicable to this network-side device embodiment, and the same technical effect can be achieved.

Specifically, an embodiment of this application further provides a network-side device. As shown in FIG. 8, the network-side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701 and transmits the received information to the baseband apparatus 703 for processing. In a downlink direction, the baseband apparatus 703 processes information to be transmitted and transmits the processed information to the radio frequency apparatus 702. The radio frequency apparatus 702 processes the received information, and then transmits the processed information via the antenna 701.

The method executed by the network-side device in the above embodiments can be implemented in the baseband apparatus 703, where the baseband apparatus 703 includes a baseband processor.

The baseband apparatus 703 may include, for example, at least one baseband panel. The baseband panel is provided with a plurality of chips. One of the chips is, for example, the baseband processor, which is connected to the memory 705 via a bus interface to call a program in the memory 705 to execute the network device operations shown in the above method embodiments.

The network-side device may also include a network interface 706. The interface is, for example, a common public radio interface (Common Public Radio Interface, CPRI).

Specifically, the network-side device 700 in this embodiment of this application further includes: an instruction or program that is stored in the memory 705 and runnable on the processor 704. The processor 704 calls the instruction or program in the memory 705 to execute the methods executed by the modules shown in FIG. 5, and the same technical effect is achieved, which therefore will not be repeated here in order to avoid repetition.

An embodiment of this application further provides a readable storage medium having stored thereon a program or instruction which, when executed by a processor, implements the various processes of the information transmitting method or information receiving method embodiments mentioned above, and the same technical effect can be achieved, which will not be repeated here in order to avoid repetition.

The processor is the processor in the terminal described in the embodiments mentioned above. The readable storage medium includes a computer-readable storage medium, such as a computer read-only memory ROM, a random access memory RAM, a magnetic disk or an optical disk.

An embodiment of this application further provides a chip, including a processor and a communication interface, where the communication interface is coupled with the processor, and the processor is configured to run a program or instruction to implement the various processes of the information transmitting method or information receiving method embodiments mentioned above, and the same technical effect can be achieved, which will not be repeated here in order to avoid repetition. It should be understood that the chip provided in this embodiment of this application may also be referred to as a system-level chip, a system chip, a chip system or a system on chip.

An embodiment of this application further provides a computer program/program product. The computer program/program product is stored in a storage medium and executed by at least one processor to implement the various processes of the information transmitting method or information receiving method mentioned above, and the same technical effect can be achieved, which will not be repeated here in order to avoid repetition.

An embodiment of this application further provides an information transceiving system, including: a transmitting end and a receiving end, where the transmitting end may be configured to execute the steps of the information transmitting method as described above, and the receiving end may be configured to execute the steps of the information receiving method as described above.

It should be noted that the terms "include", "comprise", or any other variation thereof in the description are intended to cover a non-exclusive inclusion, such that processes, methods, objects, or apparatuses, that includes a series of elements not only includes those elements, but also includes other elements that are not explicitly listed, or also includes elements inherent to such processes, methods, objects, or apparatuses. Without further limitations, the element limited by the statement "including a..." does not exclude the existence of another identical element in a process, a method, an object, or an apparatus that includes that element. In addition, it should be pointed out that the scope of the methods and apparatus in the embodiments of this application is not limited to performing the functions in the order shown or discussed, and may also include performing functions in a substantially simultaneous manner or in reverse order according to the functions involved. For example, the described methods may be performed in a different order than described, and various steps may also be added, omitted, or combined. In addition, features described with reference to certain examples may be combined in other examples.

Through the description of the above embodiments, those skilled in the art can clearly understand that the above embodiment method may be implemented through software and necessary universal hardware platforms. Of course, they may also be implemented through hardware. However, in many cases, the former is the preferred embodiment. Based on this understanding, the technical scheme of this application, or the part that contributes to the existing technology, may be reflected in the form of a software product, which is stored in a storage medium (such as ROM/RAM, magnetic disc or optical disc), including several instructions to enable a terminal (which may be a mobile phone, a computer, a server, an air conditioner or a network-side device) to execute the methods described in the embodiments of this application.

The embodiments of this application have been described above with reference to the drawings. However, this application is not limited to the specific embodiments above. The specific embodiments above are only exemplary rather than restrictive. Under the inspiration of this application, those skilled in the art may make many variations without departing from the essence and the scope of protection of this application, which, however, still fall within the scope of protection of this application.

## Claims

1. An information receiving method, comprising:
receiving, by a terminal, downlink control information DCI transmitted by a network-side device, the DCI being used for scheduling N cells for transmission, N being an integer greater than 1.

2. The method according to claim 1, wherein the N cells meet a first condition, the first condition comprising at least one of the following:
each of the N cells has at least one data channel or reference signal;
at least two of the N cells belong to a same cell group;
at least two of the N cells belong to a preset cell group;
at least two of the N cells belong to a same timing advance group TAG;
working modes of at least two of the N cells are matched;
frequency-domain resources of at least two of the N cells are matched;
at least two of the N cells belong to a same physical uplink control channel PUCCH cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; wherein
N is less than or equal to a preset value.

3. The method according to claim 2, wherein that working modes of at least two of N cells are matched comprises at least one of the following:
time division duplex patterns of the at least two of the N cells are the same, and/or the time division duplex patterns of the at least two of the N cells are a preset pattern; and
half-duplex modes of the at least two of the N cells are the same, and/or the half-duplex modes of the at least two of the N cells are a preset mode.

4. The method according to claim 2, wherein that frequency-domain resources of at least two of the N cells are matched comprises at least one of the following:
the at least two of the N cells belong to a same band;
the at least two of the N cells belong to a same band combination;
the at least two of the N cells belong to a same band pair;
the at least two of the N cells belong to a same frequency range;
the at least two of the N cells belong to a licensed spectrum;
the at least two of the N cells belong to an unlicensed spectrum;
the at least two of the N cells belong to a preset band;
the at least two of the N cells belong to a preset band combination;
the at least two of the N cells belong to a preset band pair;
the at least two of the N cells belong to a preset frequency range;
the at least two of the N cells belong to a preset licensed spectrum; and
the at least two of the N cells belong to a preset unlicensed spectrum.

5. The method according to claim 2, wherein that parameters of at least two of the N cells or parameters of activated bandwidth parts BWPs of at least two of the N cells are matched comprises at least one of the following:
the activated bandwidth parts BWPs of the at least two of the N cells are the same in at least one of subcarrier spacing SCS, bandwidth, a number of resource blocks RBs, and a number of resource block groups RBGs;
the at least two of the N cells are the same in at least one of the SCS, the bandwidth, the number of resource blocks RBs, and the number of resource block groups RBGs;
at least one of the SCS, the bandwidth, the number of RBs, and the number of RBGs of the activated BWPs of the at least two of the N cells is a preset value;
at least one of the SCS, the bandwidth, the number of RBs, and the number of RBGs of the at least two of the N cells is a preset value;
the activated BWPs of the at least two of the N cells have the SCS less than or greater than or equal to preset SCS; and
the at least two of the N cells have the SCS less than or greater than or equal to the preset SCS.

6. The method according to claim 1, wherein each of the N cells has at least one data channel, and the data channels of the N cells meet a second condition, the second condition comprising at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of BW, a number of RBs, an RBG size, and an identifier ID;
at least one of BW, a number of RBs, an RBG size, and an ID of BWPs where at least two data channels are located is a preset value;
modulation and coding schemes MCSs of at least two data channels are the same;
redundant versions RVs of at least two data channels are the same;
new data indicators NDIs of at least two data channels are the same;
transport blocks TBs corresponding to at least two data channels are the same;
a number of codewords corresponding to at least two data channels is the same;
a number of codewords corresponding to at least two data channels is a preset value;
at least two data channels have same priority information;
logical channels or logical channel groups LCGs corresponding to at least two data channels are the same;
at least two data channels have a same priority of hybrid automatic repeat request HARQ feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group CBG indicators of at least two data channels are the same;
CBG indicators of at least two data channels are a preset value;
HARQ feedback delays of at least two data channels are the same;
at least two data channels have same space-domain information or quasi co-location QCL information; and
at least two data channels have same power control information.

7. The method according to claim 6, wherein the data channel comprises at least one of the following:
a physical downlink shared channel PDSCH; and
a physical uplink shared channel PUSCH.

8. The method according to claim 1, wherein the DCI meet a third condition, the third condition comprising at least one of the following:
the DCI is DCI in a preset format;
the DCI is DCI within a preset search space;
the DCI is DCI of a preset control channel element CCE;
the DCI is DCI at a preset aggregation level AL;
the DCI does not support simultaneous BWP switching and multi-cell scheduling; and
the DCI indicates that IDs of BWPs to be switched to in different cells are the same.

9. The method according to any one of claims 1 to 8, wherein the method further comprises:
transmitting, by the terminal, target information to the network-side device, the target information being used for indicating any one of the following:
a type of the terminal;
a target condition supported by the terminal, wherein target condition is at least one of the following: the first condition, the second condition, and the third condition.

10. The method according to any one of claims 1 to 8, wherein the method further comprises:
determining, by the terminal, any one of the following in a case that a capability of the terminal and/or configuration on a network side does not support the target condition:
the scheduling with the DCI is invalid;
the scheduling with the DCI is invalid in some of the cells;
the target condition is at least one of the following: the first condition, the second condition, and the third condition.

11. The method according to claim 10, wherein the some of the cells comprise a first cell, wherein
a number of cells of which the scheduling is supported by the terminal is less than that of cells scheduled with the DCI; and/or
the first cell is in an inactive state or a dormant state; and/or
a data channel of the first cell conflicts with time division duplex TDD pattern configuration; and/or
SCS of an activated BWP of the first cell is different from that of activated BWPs of the remaining cells; and/or
a BWP ID of the activated BWP of the first cell is different from those of the activated BWPs of the remaining cells; and/or
the activated BWP of the first cell is greater or less than reference SCS.

12. The method according to any one of claims 1 to 8, wherein the terminal expects that sending or receiving of at least one PDSCH and/or PUSCH in all PDSCHs and/or PUSCHs scheduled in the N cells meets the target condition, wherein the target condition is at least one of the following: the first condition, the second condition, and the third condition.

13. The method according to any one of claims 1 to 8, wherein configuration or activation for multi-cell scheduling of the N cells with a DCI is based on any one of the following:
a cell group;
a PUCCH cell group; and
a cell.

14. The method according to claim 13, wherein at least two cells within a target cell group or a target PUCCH cell group are scheduled with the DCI, wherein the target cell group or the target PUCCH cell group is a cell group which has been configured or activated for multi-cell scheduling.

15. The method according to any one of claims 1 to 8, wherein the DCI is used for scheduling cells in at least one cell list in a cell group.

16. The method according to any one of claims 1 to 8, wherein before receiving the DCI by the terminal, the method further comprises:
transmitting, by the terminal, a capability of the terminal to the network-side device;
wherein the capability of the terminal comprises at least one of the following:
supporting at least one of a band, a carrier, a BWP, a cell group, a PUCCH cell group, a resource pool, and a frequency range set used for the scheduling of the N cells;
supporting types of the scheduling of the N cells; and
supporting DCI fields shared in different cells, and/or supporting independent DCI fields in different cells.

17. The method according to claim 16, wherein the supporting types of the scheduling of the N cells comprises at least one of the following:
the cell is of intra-band carrier aggregation;
the cell is of inter-band carrier aggregation;
a timing advance group of the cell is a single-TAG; and
a timing advance group of the cell is a multi-TAG.

18. An information transmitting method, comprising:
transmitting, by a network-side device, downlink control information DCI to a terminal, the DCI being used for scheduling N cells for transmission, N being an integer greater than 1.

19. The method according to claim 18, wherein the N cells meet a first condition, the first condition comprising at least one of the following:
each of the N cells has at least one data channel or reference signal;
at least two of the N cells belong to a same cell group;
at least two of the N cells belong to a preset cell group;
at least two of the N cells belong to a same timing advance group TAG;
working modes of at least two of the N cells are matched;
frequency-domain resources of at least two of the N cells are matched;
at least two of the N cells belong to a same physical uplink control channel PUCCH cell group;
at least two of the N cells belong to a preset PUCCH cell group;
parameters of at least two of the N cells or parameters of activated bandwidth parts BWPs of at least two of the N cells are matched;
at least one of the N cells is in an active state; and
an activated BWP of at least one of the N cells is in a non-dormant state; wherein
N is less than or equal to a preset value.

20. The method according to claim 18, wherein each of the N cells has at least one data channel, and the data channels of the N cells meet a second condition, the second condition comprising at least one of the following:
time-domain resources of at least two data channels are the same;
frequency-domain resources of at least two data channels are the same;
BWPs where at least two data channels are located have same SCS;
SCS of BWPs where at least two data channels are located is preset SCS;
BWPs where at least two data channels are located are the same in at least one of BW, a number of RBs, an RBG size, and an identifier ID;
at least one of BW, a number of RBs, an RBG size, and an ID of BWPs where at least two data channels are located is a preset value;
modulation and coding schemes MCSs of at least two data channels are the same;
redundant versions RVs of at least two data channels are the same;
new data indicators NDIs of at least two data channels are the same;
transport blocks TBs corresponding to at least two data channels are the same;
a number of codewords corresponding to at least two data channels is the same;
a number of codewords corresponding to at least two data channels is a preset value;
at least two data channels have same priority information;
logical channels or logical channel groups LCGs corresponding to at least two data channels are the same;
at least two data channels have a same priority of hybrid automatic repeat request HARQ feedback;
at least two data channels have a same antenna port or precoding;
at least two data channels have a same panel;
channel access types corresponding to at least two data channels are the same, and/or channel access classes are the same;
channel access types corresponding to at least two data channels are a preset type, and/or channel access classes are a preset grade;
HARQ process identifiers of at least two data channels are the same, and/or are consecutive, and/or have an association relationship;
code block group CBG indicators of at least two data channels are the same;
CBG indicators of at least two data channels are a preset value;
HARQ feedback delays of at least two data channels are the same;
at least two data channels have same space-domain information or quasi co-location QCL information; and
at least two data channels have same power control information.

21. The method according to claim 18, wherein the DCI meet a third condition, the third condition comprising at least one of the following:
the DCI is DCI in a preset format;
the DCI is DCI within a preset search space;
the DCI is DCI of a preset control channel element CCE;
the DCI is DCI at a preset aggregation level AL;
the DCI does not support simultaneous BWP switching and multi-cell scheduling; and
the DCI indicates that IDs of BWPs to be switched to in different cells are the same.

22. An information receiving apparatus, a terminal comprising the information receiving apparatus, the information receiving apparatus comprising:
a receiving module, configured to receive downlink control information DCI transmitted by a network-side device, the DCI being used for scheduling N cells for transmission, N being an integer greater than 1.

23. An information transmitting apparatus, a network-side device comprising the information transmitting apparatus, comprising:
a transmitting module, configured to transmit downlink control information DCI to a terminal, the DCI being used for scheduling N cells for transmission, N being an integer greater than 1.

24. A terminal, comprising a processor and a memory, wherein the memory stores a program or instruction runnable on the processor, and the program or instruction, when executed by the processor, implements the steps of the information receiving method according to any one of claims 1 to 17.

25. A network-side device, comprising a processor and a memory, wherein the memory stores a program or instruction runnable on the processor, and the program or instruction, when executed by the processor, implements the steps of the information transmitting method according to any one of claims 18 to 21.

26. A readable storage medium having stored thereon a program or instruction which, when executed by a processor, implements the steps of the information receiving method according to any one of claims 1 to 17 or implement the steps of the information transmitting method according to any one of claims 18 to 21.
